Europäisches Patentamt

European Patent Office

Office européen des brevets

(11) Veröffentlichungsnummer: **0 227 954**
A2

## (12) EUROPÄISCHE PATENTANMELDUNG

(21) Anmeldenummer: 86116458.0

(22) Anmeldetag: 27.11.86

(51) Int. Cl.⁴: **G 11 B 15/61**, G 11 B 15/665

(30) Priorität: 23.12.85 DE 3545964

(43) Veröffentlichungstag der Anmeldung: 08.07.87
Patentblatt 87/28

(84) Benannte Vertragsstaaten: DE FR GB IT

(71) Anmelder: GRUNDIG E.M.V. Elektro-Mechanische Versuchsanstalt Max Grundig holländ. Stiftung & Co. KG., Kurgartenstrasse 37, D-8510 Fürth (DE)

(72) Erfinder: Schmidt, Erhard, Ing. grad., Kurgartenstrasse 37, D-8510 Fürth/Bay. (DE)

(54) Einrichtung zur Halterung eines Bandführungselements in einem Video-Magnetbandgerät.

(57) Beschrieben ist eine Einrichtung zur Halterung eines Bandführungselements in einem Video-Magnetbandgerät, die aus einem dem Bandführungselement zugeordnetem Gleitschuh und einem am Gerätechassis befindlichen Hebelteil besteht. Das Bandführungselement wird lose mittels eines Antriebselements von der Geräte-Ausgangslage in eine Geräte-Endlage geführt, und legt ein aus einer Bandkassette gezogenes Magnetband teilweise um eine Kopftrommel eines nach dem Schrägspurverfahren arbeitenden Videogerätes. Hierbei wird das Bandführungselement an Zentrierflächen eines Halteteils mittels einer besonders ausgebildeten Bandführungsrolle angelegt und wird erst in seiner Endlage in die zur Kopftrommel erforderliche Winkel- und insbesondere Höhenlage gebracht.

0611645 0.0

0227954

- (

# EINRICHTUNG ZUR HALTERUNG EINES BANDFÜHRUNGS-ELEMENTS IN EINEM VIDEO-MAGNETBANDGERÄT

## BESCHREIBUNG

Die Erfindung bezieht sich auf eine Einrichtung zur Halterung eines Bandführungselements in einem Video-Magnetbandgerät gemäß dem Oberbegriff des Anspruchs 1.

Es ist bekannt, daß bei Video-Magnetbandgeräten, die nach dem sogenannten Schrägspurverfahren arbeiten, das in einer Bandkassette befindliche Magnetband mittels Bandführungselemente aus der Kassette herausgezogen und teilweise um eine rotierende Kopftrommel gelegt wird. Die Bandführungselemente sind hierbei auf einem ringförmigen Teil aufgesetzt, das wiederum getrennt antreibbar um die Kopftrommel gelegt ist. Auch sind Bandführungselemente ausschließlich oder

5

zusätzlich auf Schwenkhebeln angeordnet und direkt
oder über das ringförmige   Teil antreibbar. Für
einen einwandfreien Bandlauf im Gerät ist die genaue
Lage der Bandführungselemente zur Lage der Kopftrommel besonders entscheidend. Die Antriebselemente
für die Bandführungselemente in Form von Bandführungsstiften oder insbesondere von Bandführungsrollen sind daher mit besonderer Genauigkeit auszuführen und zu lagern. Wichtig ist ferner, daß bei einem
Gerätelangzeitbetrieb mit häufig wechselnder Kassette
die Wiederholungsgenauigkeit der Bandführungsrollen
im Gerät gewährleistet ist.

Nachteilig ist, daß alle die mit der Bewegung der
Bandführungselemente in Zusammenhang stehenden Teile
aufwendig und somit mit hohen Fertigungskosten verbunden sind, obgleich die sehr hohe Genauigkeitsforderung an die Lage der Bandführungselemente nur bei
deren End- und somit Betriebslage erforderlich ist,
und nicht während des Transportes des Bandes aus der
Kassette zur Gerätebetriebslage bzw. Endlage.

Die der Erfindung zugrundeliegende Aufgabe besteht
darin, eine preiswerte Einrichtung zur Halterung
eines Bandführungselements in einem Video-Magnetbandgerät zu schaffen, bei der die genaue Lagenfixierung und insbesondere deren Wiederholungsgenauigkeit des Bandführungselements zur Kopftrommel

6

in der Endstellung des Bandführungselements in einfachster Weise sichergestellt ist, ohne daß eine kostenaufwendige Präzision aller Antriebsteile, die für den Antrieb des Bandführungselements erforderlich sind, notwendig ist.

Diese Aufgabe wird durch die kennzeichnenden Merkmale im Anspruch 1 gelöst.

Die Unteransprüche zeigen Ausgestaltungen der Erfindung.

Die Erfindung wird nachfolgend anhand der Zeichnungen näher erläutert.

Fig. 1    ist eine vereinfachte perspektivische Ansicht der wesentlichsten Teile des Laufwerkes eines Videorecorders mit einer erfindungsgemäßen Einrichtung zur Halterung eines Bandführungselements in seiner Endstellung,

Fig. 2    ist eine vergrößerte Teil-Seitenansicht der Fig. 1 in Pfeilrichtung II gesehen, mit den wesentlichsten Teilen zur Halterung eines Bandführungselements in seiner Geräte-Endstellung, und

Fig. 3      ist eine Draufsicht auf die Halterung
            nach Fig. 2, jedoch ohne einem eingeschobenen Bandführungselement.

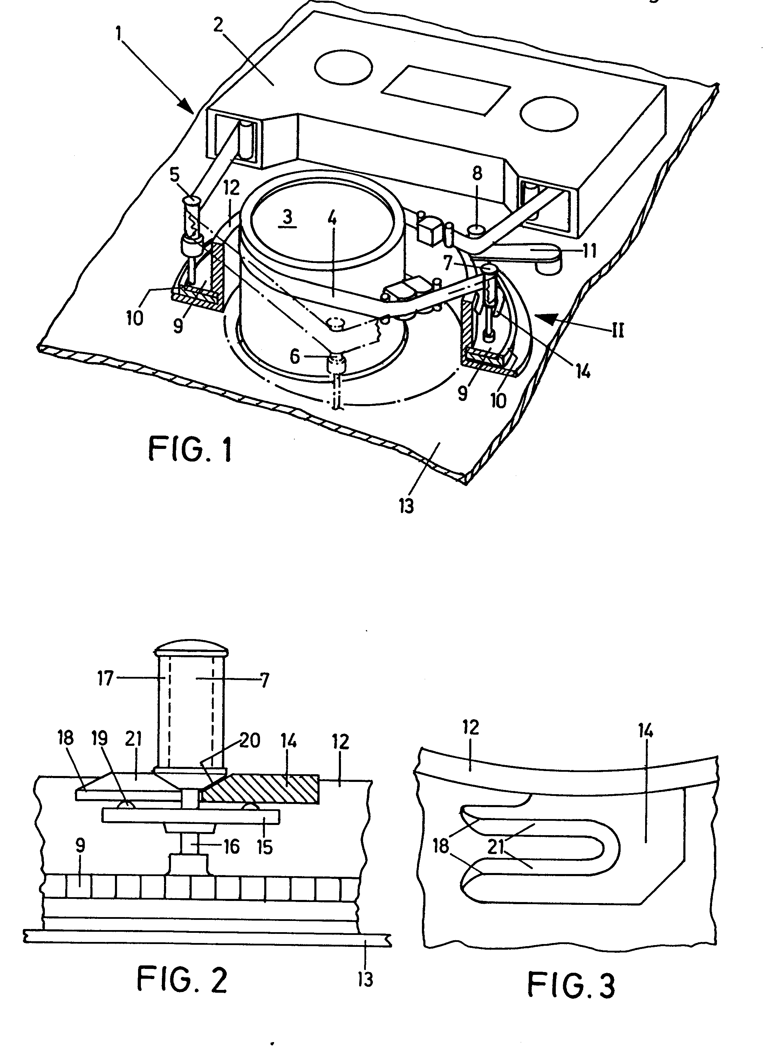

Die Figur 1 zeigt in perspektivischer Darstellung die
wesentlichsten Teile des Laufwerks eines Video-
Magnetbandgerätes 1, wobei vorzugsweise nur die Lage
eines aus einer Kassette 2 herausgezogenen und um
eine Kopftrommel 3 gelegten Magnetbandes 4 gezeichnet
ist. Die hierfür erforderlichen Bandführungselemente
5, 6, 7, 8 sind auf verschiedenen Antriebselementen
aufgesetzt und können von einer Geräteausgangslage
in eine Geräteendlage gebracht werden. In der dargestellten Figur sind die Bandführungselemente 5, 6, 7
auf zwei über einen nicht dargestellten Motor antreibbaren ringförmigen Antriebsteilen 9, 10 angeordnet,
und abweichend hierzu ist das Bandführungselement 8
auf einem Schwenkhebel 11 befestigt. Die ringförmigen
Antriebsteile 9, 10 sind auf einem Träger 12, der auf
einem Gerätechassis 13 aufgesetzt ist, aufgelegt und
hierdurch geführt. Am Träger 12 ist ein Halteteil 14
angebracht, das im wesentlichen als Anschlag und zur
Endlagenfixierung des Bandführungselements 7 dient.

Aus der Figur 2 ist ersichtlich, wie unter entsprechender Zuordnung zur Kopftrommel das Bandführungselement 7 in seiner Geräte-Endlage im Halteteil 14
eingeschoben ist. Dem Bandführungselement ist hierfür

8

ein Gleitschuh 15 zugeordnet, der auf einer Achse 16 aufgesteckt ist. Die Achse ist Bestandteil des Bandführungselements,das im wesentlichen aus einer Führungsrolle 17 und der Achse 16 besteht. Die Achse 16 ist im Antriebsteil 9 gelagert. Dem Halteteil 14 ist eine gabelförmige Zunge 18 zugeordnet. In die gabelförmige Zunge des Halteteils 14 wird das Bandführungselement 7 hineingeschoben. Hierbei gelangt der Gleitschuh 15 über Gleitnoppen 19 am Unterteil des Halteteils 14 zur Anlage, und hält die Führungsrolle 17 über einen stirnseitig angebrachten Konus 20 an Führungsflächen 21, die an den gabelartigen Zungen 18 angebracht sind, in einer axakten bestimmbaren Gerätelage fest.

Die Figur 3 läßt erkennen, daß das Halteteil 14 mit dem Träger 12 einstückig verbunden ist und aus den gabelförmigen Zungen 18 mit den beidseitig angebrachten Schrägflächen 21 besteht. Das Bandführungselement 7 ist nach der dargestellten Zeichnung aus dem Halteteil ausgefahren und in seine Ausgangsstellung zurückgekehrt.

- | -

# EINRICHTUNG ZUR HALTERUNG EINES BANDFÜHRUNGS- ELEMENTS IN EINEM VIDEO-MAGNETBANDGERÄT

## PATENTANSPRÜCHE

1. Einrichtung zur Halterung eines Bandführungselementes in einem Video-Magnetbandgerät, wobei das
Videogerät nach dem sogenannten Schrägspurverfahren
arbeitet und das Magnetband durch Bandführungselemente aus einer Magnetbandkassette herausgezogen und
teilweise um eine rotierende Kopftrommel gelegt wird,
und daß Antriebselemente die Bandführungselemente von
einer Geräte-Ausgangslage in eine Geräte-Endlage
befördern, d a d u r c h  g e k e n n z e i c h -
n e t , daß wenigstens einem Bandführungselement
(7) ein Gleitschuh (15) zugeordnet ist und in der
Geräte-Endlage in ein Halteteil (14) am Gerät derart
eingeschoben wird, daß eine gabelförmige Zunge (18),
die an dem Halteteil (14) angebracht ist, zwischen
Gleitschuh (15) und einem Konus (20) am Bandführungselement anliegt, und das Bandführungselement in einer
zur Kopftrommel vorgegebenen Lage fixiert.

2

2. Einrichtung nach Anspruch 1, d a d u r c h
g e k e n n z e i c h n e t , daß das Halteteil (14)
am Gerätechassis oder an einem dem Chassis zugeordneten Träger (12) angebracht ist.

3. Einrichtung nach den Ansprüchen 1 und 2,
d a d u r c h  g e k e n n z e i c h n e t , daß
die gabelförmige Zunge (18) an dem Halteteil (14) im
Führungsbereich für den Konus des Bandführungselements
Schrägflächen (21) aufweist.

4. Einrichtung nach einem der bisherigenAnsprüche, d a d u r c h  g e k e n n z e i c h n e t ,
daß der Gleitschuh (15) am Bandführungselement vorzugsweise drei Gleitnoppen (19) aufweist.

5. Einrichtung nach einem der bisherigen Ansprüche, d a d u r c h  g e k e n n z e i c h n e t ,
daß das Bandführungselement eine Führungsrolle (17)
aufweist.

6. Einrichtung nach einem der bisherigen Ansprüche, d a d u r c h  g e k e n n z e i c h n e t ,
daß der Konus (20) an einer Stirnseite der Führungsrolle (17) angeordnet ist.

7. Einrichtung nach einem der bisherigen Ansprüche, d a d u r c h  g e k e n n z e i c h n e t ,
daß die Führungsrolle auf einer Achse (16) aufgesetzt
ist.

8. Einrichtung nach einem der bisherigen Ansprüche, d a d u r c h  g e k e n n z e i c h n e t , daß der Gleitschuh (15) auf der Achse (16) unterhalb des an der Führungsrolle befindlichen Konusses (20) angeordnet ist.

9. Einrichtung nach einem der bisherigen Ansprüche, d a d u r c h  g e k e n n z e i c h n e t , daß die Achse (16) auf einem Antriebselement aufgesetzt ist.

10. Einrichtung nach einem der bisherigen Ansprüche, d a d u r c h  g e k e n n z e i c h n e t , daß das Antriebeselement aus einem über einen Motor antreibbares ringförmiges Antriebsteil (9) besteht.

FIG. 1

FIG. 2

FIG.3

0227954
Reg. 2036